(19) **Europäisches Patentamt / European Patent Office / Office européen des brevets**

(11) **EP 4 167 112 A1**

(12) **EUROPEAN PATENT APPLICATION**
published in accordance with Art. 153(4) EPC

(43) Date of publication:
**19.04.2023  Bulletin 2023/16**

(21) Application number: **20939653.0**

(22) Date of filing: **11.06.2020**

(51) International Patent Classification (IPC):
***G06F 21/32*** (2013.01)

(52) Cooperative Patent Classification (CPC):
**G06V 40/172; G06F 21/32; G06V 40/171;**
**G06V 40/20**

(86) International application number:
**PCT/JP2020/023005**

(87) International publication number:
**WO 2021/250845 (16.12.2021 Gazette 2021/50)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **FUJITSU LIMITED**
**Kawasaki-shi, Kanagawa 211-8588 (JP)**

(72) Inventor: **HAMA, Soichi**
**Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **AUTHENTICATION METHOD, INFORMATION PROCESSING DEVICE, AND AUTHENTICATION PROGRAM**

(57)     A computer accepts biometric information to be authenticated detected by a first sensor. In a case where one or more persons are detected by a second sensor at the time of detection of the biometric information to be authenticated, the computer specifies one person included in the one or more persons on the basis of a movement of each of the one or more persons. The computer selects registered biometric information associated with registered face image information similar to face image information of the specified one person, from among a pieces of the registered biometric information respectively associated with a plurality of pieces of registered face image information. The computer authenticates the biometric information to be authenticated on the basis of a comparison result of comparing the biometric information to be authenticated with the selected registered biometric information.

**FIG. 2**

```
          START
            │
            ▼
┌─────────────────────────────┐
│ ACCEPT BIOMETRIC INFORMATION │  201
│      TO BE AUTHENTICATED     │
└─────────────────────────────┘
            │
            ▼
┌─────────────────────────────┐
│        SPECIFY PERSON        │  202
└─────────────────────────────┘
            │
            ▼
┌─────────────────────────────┐
│  SELECT REGISTERED BIOMETRIC │  203
│          INFORMATION         │
└─────────────────────────────┘
            │
            ▼
┌─────────────────────────────┐
│         AUTHENTICATE         │  204
└─────────────────────────────┘
            │
            ▼
           END
```

EP 4 167 112 A1

**Description**

TECHNICAL FIELD

The present invention relates to an authentication technology.

BACKGROUND ART

Biometric authentication is a technology for verifying a person in question using biometric features such as fingerprints, palm prints, veins, or faces. In the biometric authentication, biometric features acquired from a person to be authenticated are compared (collated) with biometric features registered in advance in a registration template, and authentication for the person to be authenticated is performed on the basis of a comparison result indicating whether or not the biometric features match. The biometric features registered in the registration template may be referred to as registered data.

The biometric authentication is used in various fields such as bank automated teller machines (ATMs) or physical access control, and in recent years, the biometric authentication has begun to be used for cashless payments in stores such as supermarkets or convenience stores.

As authentication methods for biometric authentication, 1:1 authentication and 1:N authentication have been known. The 1:1 authentication is an authentication method for comparing biometric features of a person to be authenticated with registered data specified by an ID such as a personal identification number (PIN) code, a card, or the like. The 1:N authentication is an authentication method for searching for registered data that matches the biometric features of the person to be authenticated from among a plurality of pieces of registered data. In stores or the like, the 1:N authentication is often adopted from a viewpoint of convenience.

However, since the biometric feature fluctuates depending on an acquisition status or the like, if the number of pieces of registered data to be searched increases, a possibility of occurrence of erroneous authentication increases. For this reason, an operation of narrowing the registered data with a simple PIN code or the like and making a set of registered data to be searched be sufficiently small, and then, performing the 1:N authentication is conducted. How small the set of registered data is made to reach a practical level depends on the type of biometric feature. However, even if the PIN code is simple, making the person to be authenticated enter the PIN code impairs convenience.

Therefore, an authentication method for narrowing a set of registered data using one biometric feature and authenticating a person to be authenticated using another biometric feature, using a plurality of types of biometric features, has been proposed. Since convenience is impaired if the plurality of types of biometric features is individually acquired, an authentication method for acquiring a palm vein at the same time as a fingerprint, an authentication method for capturing a face image when acquiring the palm vein, and the like have been proposed (for example, see Patent Document 1 and Non-Patent Document 1).

A technique for estimating two-dimensional poses of a plurality of persons in an image has been known (for example, see Non-Patent Document 2).

SUMMARY

TECHNICAL PROBLEM

For example, in a case of narrowing a set of registered data with a face image and authenticating a person to be authenticated with a palm vein, using the biometric authentication technology described in Non-Patent Document 1, a load of authentication processing may increase.

Note that such a problem occurs not only in a case of authenticating the person to be authenticated using the palm vein but also in a case of authenticating the person to be authenticated using the another biometric feature.

According to one aspect, an object of the present invention is to reduce a load of authentication processing in biometric authentication using a face image and biometric information other than the face image.

SOLUTION TO PROBLEMS

In one option, a computer accepts biometric information to be authenticated detected by a first sensor. In a case where one or more persons are detected by a second sensor at the time of detection of the biometric information to be authenticated, the computer specifies one person included in the one or more persons on the basis of a movement of each of the one or more persons.

The computer selects registered biometric information associated with registered face image information similar to face image information of the specified one person, from among a pieces of the registered biometric information respectively associated with a plurality of pieces of registered face image information. The computer authenticates the biometric information to be authenticated on the basis of a comparison result of comparing the biometric information to be authenticated with the selected registered biometric information.

ADVANTAGEOUS EFFECTS OF INVENTION

According to one aspect, in biometric authentication using a face image and biometric information other than the face image, a load of authentication processing can be reduced.

BRIEF DESCRIPTION OF DRAWINGS

FIG. 1 is a functional configuration diagram of an information processing device;
FIG. 2 is a flowchart of biometric authentication processing;
FIG. 3 is a functional configuration diagram illustrating a specific example of the information processing device;
FIG. 4 is a diagram illustrating a captured image in which a plurality of persons is captured;
FIG. 5 is a diagram illustrating first stationary determination;
FIG. 6 is a diagram illustrating second stationary determination;
FIG. 7 is a diagram illustrating third stationary determination;
FIG. 8 is a diagram illustrating fourth stationary determination;
FIG. 9 is a flowchart illustrating a specific example of the biometric authentication processing;
FIG. 10 is a flowchart of biometric authentication processing in which person specifying processing is omitted; and
FIG. 11 is a hardware configuration diagram of the information processing device.

DESCRIPTION OF EMBODIMENTS

Hereinafter, an embodiment will be described in detail with reference to the drawings.
For example, a biometric authentication system that narrows a set of registered data using a face image and authenticates a person to be authenticated using a palm vein, using the biometric authentication technology described in Patent Document 1 and Non-Patent Document 1 will be examined. In this biometric authentication system, for example, a list of N candidates (N is an integer of one or larger) for a person to be authenticated is generated by performing face authentication. Then, authentication processing for the person to be authenticated is executed by performing 1:N authentication, using registered data of a palm vein of each candidate included in the generated list.
At this time, a plurality of faces may be simultaneously captured depending on an installation status of a camera for capturing a face image or a use status of a user who is the person to be authenticated. For example, in a case where face images of three persons are acquired, a list for the three persons is generated, so the number of target persons for palm vein authentication is 3N, and a processing time of the palm vein authentication is three times as much as a case where a face image of one person is acquired. Furthermore, in a case where N that has been initially set is an upper limit value of the 1:N authentication using the palm vein, a risk of accepting another person who is mistakenly authenticated as a person in question increases.
If an attempt is made to narrow the candidates to N/3 persons with the face images in order to shorten the processing time of the palm vein authentication and reduce the risk of accepting the another person, the processing time of the face authentication increases. Moreover, there is a possibility of missing that the person in question is not included in the list depending on authentication accuracy of the face authentication.
Therefore, a method is considered for selecting a face image of a user on the basis of a size or a position of each face image, from among a plurality of face images included in a captured image. Since a person whose face image is larger in size is closer to a camera, the person is more likely to be the user. Furthermore, as the position of the face image is closer to a specific position such as the center of the captured image, the possibility that the person is the user increases.
However, in a case where the user operates a terminal device of the biometric authentication system with a companion, the use's face image in the captured image may be almost the same size as a face image of the companion. Furthermore, in a case where the user attempts to stand in front of the terminal device side by side with one's companion, the position of the face image of the user may be deviated from the center. Therefore, in a case where the face image of the user is selected on the basis of the size or the position of each face image, it is difficult to set appropriate selection criteria.

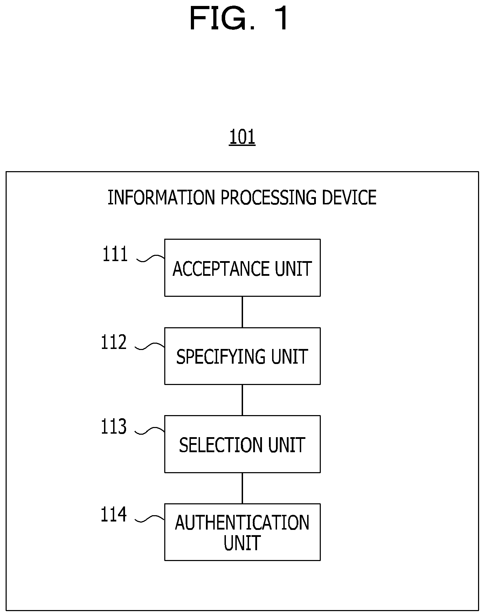

FIG. 1 illustrates a functional configuration example of an information processing device (computer) according to an embodiment. An information processing device 101 in FIG. 1 includes an acceptance unit 111, a specifying unit 112, a selection unit 113, and an authentication unit 114.

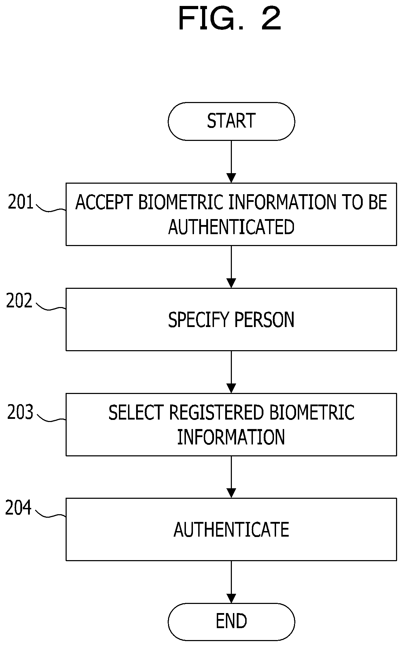

FIG. 2 is a flowchart illustrating an example of biometric authentication processing executed by the information processing device 101 in FIG. 1. First, the acceptance unit 111 accepts biometric information to be authenticated detected by a first sensor (step 201). In a case where one or more persons are detected by a second sensor at the time of detection of the biometric information to be authenticated, the specifying unit 112 specifies one person included in the one or more persons on the basis of a movement of each of the one or more persons (step 202).

Next, the selection unit 113 selects registered biometric information associated with registered face image information that is similar to face image information of the specified one person, from among pieces of the registered biometric information respectively associated with a plurality of pieces of registered face image information (step 203). Then, the authentication unit 114 authenticates the biometric information to be authenticated on the basis of a comparison result of comparing the biometric information to be authenticated with the selected registered biometric information (step 204).

According to the information processing device 101 in FIG. 1, in the biometric authentication using a face image and biometric information other than the face image, a load of authentication processing can be reduced.

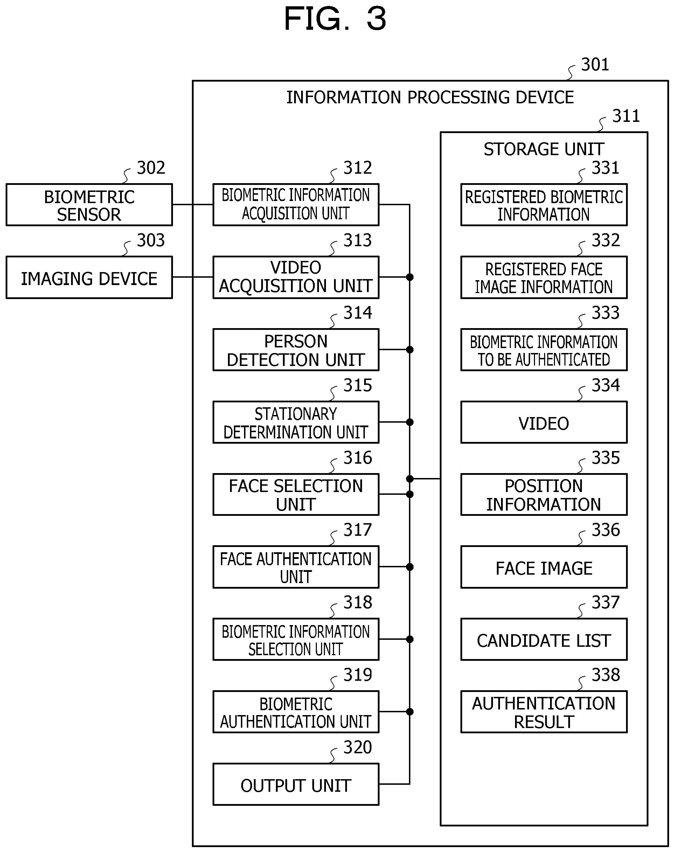

FIG. 3 illustrates a specific example of the information processing device 101 in FIG. 1. An information processing device 301 in FIG. 3 includes a storage unit 311, a biometric information acquisition unit 312, a video acquisition unit 313, a person detection unit 314, a stationary determination unit 315, a face selection unit 316, a face authentication unit 317, a biometric information selection unit 318, a biometric authentication unit 319, and an output unit 320. The information processing device 301 may be, for example, a server included in a financial processing system of a financial institution, a room entry/exit management system, or a payment system of a retail store.

The biometric information acquisition unit 312, the biometric information selection unit 318, and the biometric authentication unit 319 correspond to the acceptance unit 111, the selection unit 113, and the authentication unit 114, respectively, in FIG. 1. The stationary determination unit 315 and the face selection unit 316 correspond to the specifying unit 112 in FIG. 1. A biometric sensorbiometric sensor 302 is an example of the first sensor, and an imaging device 303 is an example of the second sensor.

The biometric sensor 302 is, for example, a vein sensor, a fingerprint sensor, an image sensor (camera), or the like, and captures an image of a living body such as a palm or a finger to acquire a biometric image such as a vein image, a fingerprint image, or a palm print image. For example, in a case where the biometric sensor 302 is a vein sensor, the biometric sensor 302 irradiates the palm with near infrared rays or the like and captures images of blood vessels or the like in the hand.

The biometric sensor 302 outputs information regarding the acquired biometric image to the information processing device 101 as biometric information to be authenticated 333. The biometric information to be authenticated 333 may be a biometric image or a pattern generated from the biometric image. The pattern generated from the biometric image is a vein pattern, a fingerprint pattern, a palm print pattern, or the like.

The imaging device 303 is a camera including an imaging element such as a charge-coupled device (CCD) or a complementary metal-oxide-semiconductor (CMOS), for example, and captures a video 334 of the person to be authenticated. A plurality of time-series images is included in the video 334 captured by the imaging device 303. The image at each clock time is an example of a captured image. The image at each clock time may be referred to as a frame. The imaging device 303 outputs the captured video 334 to the information processing device 301.

The biometric information acquisition unit 312 accepts the biometric information to be authenticated 333 by acquiring the biometric information to be authenticated 333 from the biometric sensor 302. Then, the biometric information acquisition unit 312 stores the biometric information to be authenticated 333 in the storage unit 311, together with clock time information indicating a clock time when the biometric information to be authenticated 333 is accepted. The video acquisition unit 313 accepts the video 334 by acquiring the video 334 from the imaging device 303, and stores the acquired video 334 in the storage unit 311.

The storage unit 311 stores registered biometric information 331 and registered face image information 332 of each of a plurality of persons who is a registrant. The registered biometric information 331 of each person includes a user ID and biometric information of the person. The biometric information may be a biometric image or a pattern generated from the biometric image.

The registered face image information 332 of each person includes the user ID and face image information of the person. The face image information may be a face image or a feature amount indicating a feature of the face image. As the feature amount of the face image, for example, a histograms of oriented gradients (HOG) feature amount, a scaled invariance feature transform (SIFT) feature amount, a speeded-up robust features (SURF) feature amount, or the like can be used. The feature amount of the face image may be a binary robust independent elementary features (BRIEF) feature amount or a saliency.

The biometric information included in the registered biometric information 331 of each person and the face image information included in the registered face image information 332 of each person are associated with each other with the user ID.

A plurality of persons including the person to be authenticated may appear simultaneously in the video 334 depending on the installation status of the imaging device 303 or the use status of the person to be authenticated. When the person to be authenticated inputs the biometric image in the biometric sensor 302, the person to be authenticated performs an action for holding a hand over the biometric sensor 302. At this time, if a standing position or a head position is largely changed, this prevents the action for holing the hand over the sensor. Therefore, body portions other than the hand of the person to be authenticated are often in an almost static state.

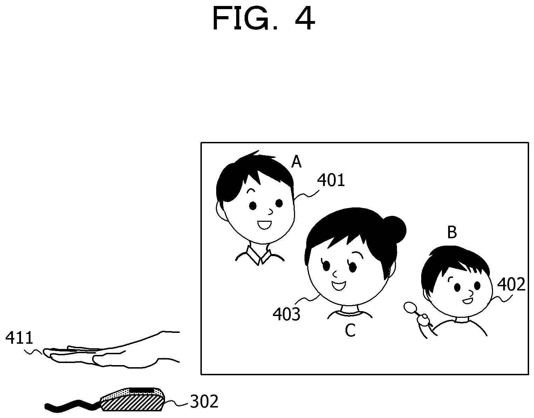

FIG. 4 illustrates an example of a captured image in which a plurality of persons is captured. A face image 401 to a face image 403 are included in the captured image in FIG. 4. Among the face images, the face image 403 corresponds to the face image of the person to be authenticated, and the face image 401 and the face image 402 correspond to face images of persons other than the person to be authenticated.

In order to hold a hand 411 over the biometric sensor 302, the person to be authenticated stands still in front of the biometric sensor 302, and the face image 403 in the video 334 also stops. On the other hand, the person other than the person to be authenticated moves without standing still, the face image 401 and the face image 402 in the video 334 also continue to move.

Therefore, by specifying a movement of each person appearing in the captured image, it is possible to determine whether or not each person is trying to input the biometric image to the biometric sensor 302 and to specify the face image of the person to be authenticated. Then, a set of the registered biometric information 331 to be compared with the biometric information to be authenticated 333 can be narrowed from the pieces of registered biometric information 331 of a large number of registrants on the basis of the specified face image. As an example, the total number of registrants is about one million, and the narrowed number of registrants is about 10 thousands.

The imaging device 303 starts to capture the video 334 when the biometric sensor 302 is in an input waiting state. The imaging device 303 detects an approaching person using a proximity sensor or the like (not illustrated) and may start imaging when the person is detected. Furthermore, the imaging device 303 may constantly wait in an imaging state.

The person detection unit 314 detects a person from each image included in the video 334 and assigns a person ID to the detected person. Then, the person detection unit 314 stores position information 335 indicating a position of each person in the image in the storage unit 311 in association with the person ID. A position indicated by the position information 335 may be a position of a specific body portion such as the head, the face, the neck, or the like of the person appearing in the image.

The person detection unit 314 can specify the position of the specific body portion by detecting skeleton information of the body from the image, by using deep learning described in Non-Patent Document 2, for example. In a case where the specific body portion is the head or the face, coordinates of a bounding box of the head or the face may be used as the position information 335.

The person detection unit 314 further detects a face image in which a face of each person is captured, from the images included in the video 334, and assigns a person ID of the person to the detected face image. In the example in FIG. 4, "A", "B", and "C" are assigned as the person IDs of the face image 401, the face image 402, and the face image 403, respectively.

The person detection unit 314 assigns the same person ID to the same person detected from different images, by tracking an object between the plurality of images included in the video 334. As a result, the same person in the plurality of images is associated.

The person detection unit 314 may regard a person whose change amount of the position of the specific body portion is less than a predetermined value, as the same person, between the plurality of images. Furthermore, the person detection unit 314 may calculate a correlation value of the face between the plurality of images using pattern matching or the like and regard a person whose calculated correlation value is larger than a predetermined value as the same person.

By detecting the person using the video 334 captured by the imaging device 303, it is possible to distinguish a plurality of persons near the biometric sensor 302 and to generate the position information 335 of each person with high accuracy.

The stationary determination unit 315 determines whether or not the body portion of each person is stationary using the position information 335. Then, the stationary determination unit 315 specifies a person having the body portion that is stationary when the biometric information to be authenticated 333 is detected as a person to be authenticated and outputs a person ID of the specified person to the face selection unit 316. At this time, the stationary determination unit 315 uses an accepting clock time indicated by the clock time information of the biometric information to be authenticated 333 as a clock time when the biometric information to be authenticated 333 is detected.

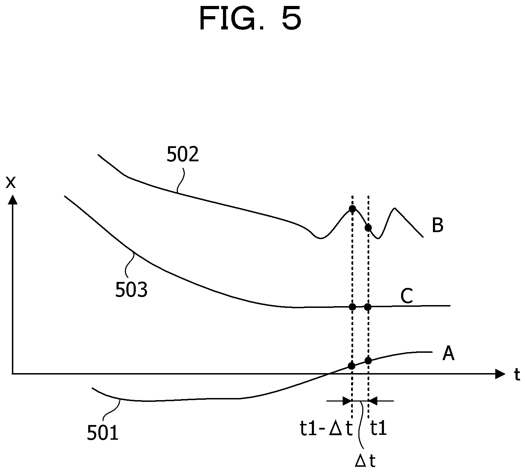

FIG. 5 illustrates an example of first stationary determination for the three persons illustrated in FIG. 4. The horizontal axis represents a clock time t, and the vertical axis represents position coordinates x of a body portion of each person appearing in a captured image. The position coordinates x may be a horizontal coordinate of the captured image or may be a vertical coordinate of the captured image.

Curves 501 to 503 represent pieces of the position information 335 with a person ID "A" to a person ID "C", respectively. The curve 501 represents a time change of the position coordinates x of the person having the person ID "A", the curve 502 represents a time change of the position coordinates x of the person having the person ID "B", and the curve 503 represents a time change of the position coordinates x of the person having the person ID "C". In this case, the person having the person ID "C" corresponds to the person to be authenticated.

A clock time t1 represents an accepting clock time indicated by the clock time information of the biometric information to be authenticated 333, and $\Delta t$ represents a time interval between two consecutive images. Therefore, the clock time t1 - $\Delta t$ represents an imaging time of an image captured immediately before an image at the clock time t1. $\Delta t$ is obtained by the following formula, using a frame rate fr of the imaging device 303.

$$\Delta t = 1/fr \quad (1)$$

For example, in a case where fr is 30 frames per second, $\Delta t$ is 33.3 ms. When position coordinates of a person in the image at the clock time t1 are assumed as x (t), the stationary determination unit 315 calculates a change amount $\Delta x$ of the position coordinates x of the person between the clock time t1 - $\Delta t$ to the clock time t1 by the following formula.

$$\Delta x = |x (t1) - x (t1 - \Delta t)| \quad (2)$$

$\Delta x$ represents a change amount in the image, and a movement amount in a three-dimensional space corresponding to $\Delta x$ changes according to a distance between the imaging device 303 and a person. Even if the movement amount in the three-dimensional space is the same, $\Delta x$ of a person away from the imaging device 303 is small, and $\Delta x$ of a person close to the imaging device 303 is large.

Therefore, the stationary determination unit 315 determines a threshold TH used for stationary determination, for example, by using landmark coordinates of a face image of each person. For example, in a case where position coordinates of the right eye in the face image are x (eye1) and position coordinates of the left eye are x (eye2), a distance w between the right eye and the left eye is given by the following formula.

$$w = |x (eye2) - x (eye1)| \quad (3)$$

In this case, the stationary determination unit 315 can set the threshold TH by the following formula, using the distance w.

$$TH = w/k \quad (4)$$

The reference k is a positive integer. The reference k may be an integer in a range of five to 15. In a case where $\Delta x$ is smaller than TH, the stationary determination unit 315 determines that the person is stationary at the clock time t1, and in a case where $\Delta x$ is equal to or more than TH, the stationary determination unit 315 determines that the person is not stationary at the clock time t1. In the example in FIG. 5, the person having the person ID "C" is determined to be stationary, and the person having the person ID "A" and the person having the person ID "B" are determined not to be stationary.

In the stationary determination illustrated in FIG. 5, only the position coordinates x at two clock times including the clock time t1 - $\Delta t$ and the clock time t1 are used, there is a possibility that erroneous determination occurs due to an effect of noise in the image. Therefore, by setting a certain width to a time range of the stationary determination and obtaining a statistical value of a change amount of the position coordinates x in the time range, it is possible to reduce the effect of the noise. As the statistical value, a mean value, a median value, a mode value, or the like can be used.

Furthermore, in a case where a biometric information input instruction is output to the person to be authenticated using a display device (not illustrated), a movement of the person to be authenticated often stops in order to confirm the biometric information input instruction displayed on a screen. In this case, it is effective to use an output time of the biometric information input instruction as a start time of the time range.

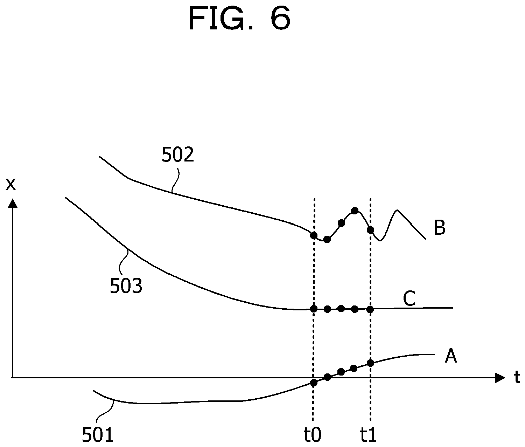

FIG. 6 illustrates an example of second stationary determination for the three persons illustrated in FIG. 4. A clock time t0 represents the output time of the biometric information input instruction. In this case, the time range of the stationary determination is a range of the clock time t0 to the clock time t1. The stationary determination unit 315 calculates an average change amount Δx_ave of the position coordinates x in this time range by the following formula.
[Expression 1]

$$\Delta x\_ave = \frac{\sum_{t=t0}^{t1} |x(t) - x(t - \Delta t)|}{n1} \qquad (5)$$

The reference n1 represents the number of images in the range from the clock time t0 to the clock time t1 and is given by the following formula.

$$n1 = (t1 - t0)/\Delta t + 1 \quad (6)$$

However, as each of the clock time t0 and the clock time t1, a clock time corresponding to an imaging time of the closest image is used. In a case where Δx_ave is smaller than TH, the stationary determination unit 315 determines that the person is stationary at the clock time t1, and in a case where Δx_ave is equal to or more than TH, the stationary determination unit 315 determines that the person is not stationary at the clock time t1.

In a case where the output time of the biometric information input instruction is unknown or in a case where the biometric information input instruction is not output, it is possible to set the time range of the stationary determination, using a time τ with a fixed length instead of the clock time t0.

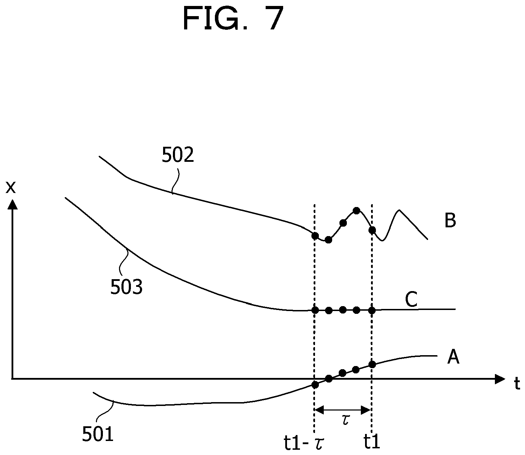

FIG. 7 illustrates an example of third stationary determination for the three persons illustrated in FIG. 4. In this case, the time range of the stationary determination is a range from a clock time t1 - τ to the clock time t1. The stationary determination unit 315 calculates an average change amount Δx_ave of the position coordinates x in this time range by the following formula.
[Expression 2]

$$\Delta x\_ave = \frac{\sum_{t=t1-\tau}^{t1} |x(t) - x(t - \Delta t)|}{n2} \qquad (7)$$

The reference n2 represents the number of images in the range of the clock time t1- τ to the clock time t1 and is given by the following formula.

$$n2 = \tau/\Delta t + 1 \quad (8)$$

However, as the clock time t1 - τ, a clock time corresponding to an imaging time of the closest image is used. The value τ may be a time that is five times to 15 times of Δt.

Even immediately after the biometric sensor 302 acquires the biometric image, the movement of the person to be authenticated often stops. Therefore, a clock time after the clock time t1 can be used as an end time of the time range of the stationary determination.

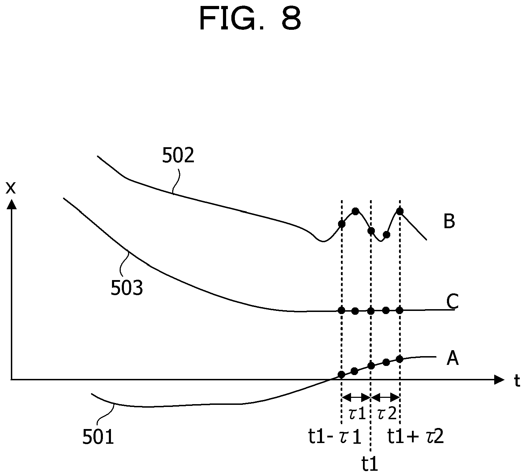

FIG. 8 illustrates an example of fourth stationary determination for the three persons illustrated in FIG. 4. In this case, the time range of the stationary determination is a range of a clock time t1 - τ1 to a clock time t1 + τ2. The stationary determination unit 315 calculates an average change amount Δx_ave of the position coordinates x in this time range by the following formula.
[Expression 3]

$$\Delta x\_ave = \frac{\sum_{t=t1-\tau1}^{t1+\tau2} |x(t) - x(t - \Delta t)|}{n3} \qquad (9)$$

The reference n3 represents the number of images in the range of the clock time t1 -τ1 to the clock time t1 + τ2 and is given by the following formula.

$$n3 = (\tau1 + \tau2)/\Delta t + 1 \ (10)$$

However, as each of the clock time t1 -τ1 and the clock time t1 + τ2, a clock time corresponding to an imaging time of the closest image is used. The value τ1 may be a time that is five times to 15 times of Δt, and τ2 may be a time shorter than τ1.

As illustrated in FIGs. 5 to 8, by determining whether or not the body portion is stationary using the position coordinates x of the body portion of the person, it is possible to estimate whether or not the input biometric information to be authenticated 333 is biometric information of the person. Moreover, by performing stationary determination using a statistical value of a change amount of the position coordinates x in a predetermined time range, it is possible to improve accuracy of estimating the person corresponding to the biometric information to be authenticated 333.

In a case where a contact type sensor as a fingerprint sensor is used as the biometric sensor 302, a time period in which the movement of the person to be authenticated stops becomes longer than that in a case where a non-contact type sensor as a vein sensor is used. Therefore, stationary determination accuracy improves.

The face selection unit 316 selects a face image 336 corresponding to the person ID output from the stationary determination unit 315, from among the plurality of face images included in the video 334 and stores the face image 336 in the storage unit 311. The face authentication unit 317 performs face authentication for the face image 336 by comparing the face image 336 with each piece of the registered face image information 332. The face authentication unit 317 calculates a similarity between the face image 336 and each piece of the registered face image information 332, for example.

In a case where the face image information included in the registered face image information 332 is a face image, the face authentication unit 317 calculates a feature amount F1 of the face image 336 and a feature amount F2 of the face image included in the registered face image information 332, and calculates a similarity using the feature amounts F1 and F2. In a case where the face image information included in the registered face image information 332 is the feature amount F2, the face authentication unit 317 calculates the feature amount F1 of the face image 336, and calculates the similarity using the feature amounts F1 and F2.

The biometric information selection unit 318 selects a predetermined number of pieces of registered face image information 332 in descending order of the similarity calculated by the face authentication unit 317. Then, the biometric information selection unit 318 generates a candidate list 337 including a user ID of the selected piece of the registered face image information 332 and stores the generated candidate list 337 in the storage unit 311. The biometric information selection unit 318 selects the registered biometric information 331 corresponding to each user ID in the candidate list 337, by generating the candidate list 337. As a result, the set of registered biometric information 331 to be compared with the biometric information to be authenticated 333 can be narrowed from the pieces of registered biometric information 331 of a plurality of persons.

The biometric authentication unit 319 performs biometric authentication for the biometric information to be authenticated 333 by comparing the biometric information to be authenticated 333 with the registered biometric information 331 corresponding to each user ID in the candidate list 337. Then, the biometric authentication unit 319 generates an authentication result 338 and stores the authentication result 338 in the storage unit 311.

The biometric authentication unit 319 calculates, for example, a similarity between the biometric information to be authenticated 333 and each piece of the registered biometric information 331, and stores the user ID of the registered biometric information 331 having the highest similarity as the authentication result 338 in the storage unit 311. The output unit 320 outputs the authentication result 338.

According to the information processing device 301 in FIG. 3, even in a case where a plurality of persons is captured in the video 334, it is possible to specify a person who is likely to be the person to be authenticated. By generating the candidate list 337 on the basis of a face image of the specified person, the set of registered biometric information 331 is appropriately narrowed.

Furthermore, loads of the processing for detecting a person from each image, stationary determination processing using the position information 335 of each person, and the processing for narrowing the registered biometric information 331 with the face image 336 are smaller than the load of the biometric authentication processing using the biometric information to be authenticated 333. For this reason, the load of the biometric authentication on the biometric information to be authenticated 333 is reduced, and high-speed and highly accurate biometric authentication processing is implemented.

Moreover, since the face image of the person other than the person to be authenticated is excluded from a face authentication processing target, privacy of the captured person can be appropriately protected.

Note that a movement of the person, other than the person to be authenticated, appearing in the video 334 accidentally stops in synchronization with input of the biometric information by the person to be authenticated, and it may be determined that the plurality of persons is stationary. In this case, the stationary determination unit 315 may specify a person with the smallest movement amount in the three-dimensional space from among these persons as the person to be authenticated.

The information processing device 301 may attempt to specify the person to be authenticated by applying another determination criterion. As another determination criterion, for example, a size or a position of each face image in an image may be used. Since the person whose face image is larger in size is closer to the imaging device 303, the possibility that the person is the person to be authenticated increases. Furthermore, as the position of the face image is closer to the center of the image, the possibility that the person is the person to be authenticated increases. Although the size or the position of the face image alone is not sufficient as the determination criterion, it is effective to use the size or the position as auxiliary information for determination.

Furthermore, the information processing device 301 may generate the candidate list 337, using each of the plurality of persons determined to be stationary as a candidate of the person to be authenticated.

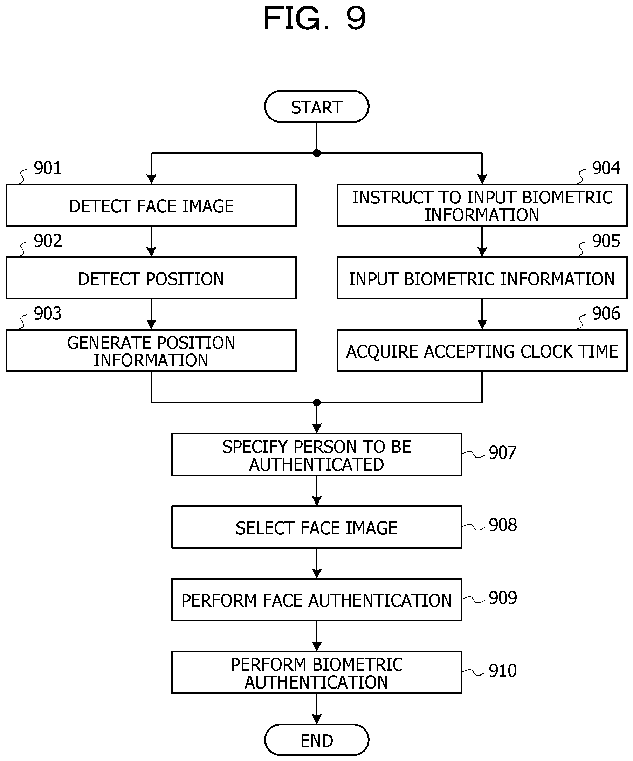

FIG. 9 is a flowchart illustrating a specific example of the biometric authentication processing executed by the information processing device 301 in FIG. 3. The imaging device 303 starts to capture of the video 334 at the same time as the start of the biometric authentication processing, and the video acquisition unit 313 acquires the video 334 from the imaging device 303.

First, the person detection unit 314 detects a face image of a person from each image included in the video 334 and assigns a person ID to the detected face image (step 901). Next, the person detection unit 314 detects a position of each person in the image (step 902) and generates the position information 335 indicating the position of each person (step 903).

In parallel with the processing in step 901 to step 903, the biometric information acquisition unit 312 instructs the person to be authenticated to input the biometric information (step 904). Next, the biometric sensor 302 inputs the biometric information to be authenticated 333, and the biometric information acquisition unit 312 acquires the biometric information to be authenticated 333 from the biometric sensor 302 (step 905). Then, the biometric information acquisition unit 312 acquires a clock time when the biometric information to be authenticated 333 is acquired as an accepting clock time (step 906).

Next, the stationary determination unit 315 determines whether or not a body portion of each person is stationary using the position information 335 and specifies a person who is stationary at the accepting clock time of the biometric information to be authenticated 333 as the person to be authenticated (step 907). Then, the stationary determination unit 315 outputs a person ID of the specified person to the face selection unit 316, and the face selection unit 316 selects the face image 336 corresponding to the person ID from among the plurality of face images included in the video 334 (step 908).

Next, the face authentication unit 317 performs the face authentication for the face image 336, and the biometric information selection unit 318 generates the candidate list 337 on the basis of the result of the face authentication (step 909). Then, the biometric authentication unit 319 performs the biometric authentication for the biometric information to be authenticated 333 using the candidate list 337, and the output unit 320 outputs the authentication result 338 (step 910).

By the way, in a case where only the person to be authenticated is captured in the video 334, it is possible to reduce a processing load by omitting the person specifying processing including the generation of the position information 335 and the stationary determination.

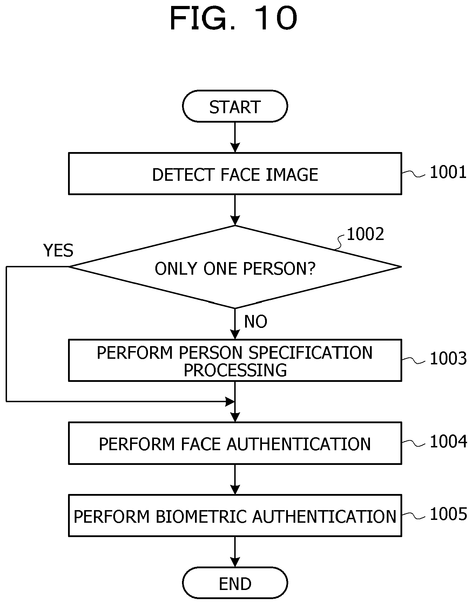

FIG. 10 is a flowchart illustrating an example of biometric authentication processing in which the person specifying processing is omitted in a case where only the person to be authenticated is captured. First, the person detection unit 314 detects a face image of a person from each image included in the video 334 and assigns a person ID to the detected face image (step 1001). In parallel to the processing in step 1001, the biometric information acquisition unit 312 executes processing similar to steps 904 to 906 in FIG. 9.

Next, the person detection unit 314 checks whether or not the detected face image is a face image of only one person (step 1002). In a case where the face image of only one person is detected (step 1002, YES), the information processing device 301 performs processing in step 1004 and step 1005. The processing in step 1004 and step 1005 is similar to the processing in step 909 and step 910 in FIG. 9.

On the other hand, in a case where face images of a plurality of persons are detected (step 1002, NO), the information processing device 301 performs the person specifying processing (step 1003). The person specifying processing is similar to the processing in steps 902, 903, 907, and 908 in FIG. 9. Then, the information processing device 301 performs the processing in steps 1004 and 1005.

In the information processing device 301 in FIG. 3, it is possible to detect a plurality of persons including the person to be authenticated, using another sensor instead of the imaging device 303. As the another sensor, for example, a human sensor using infrared rays, ultrasonic waves, or visible light, a distance sensor, or the like can be used. In this case, the person detection unit 314 detects a person from a detection result of the another sensor and generates position information 335 indicating a position of each person. Since image processing to detect a person becomes unnecessary by using the another sensor instead of the imaging device 303, it is possible to reduce a load of processing.

The configurations of the information processing device 101 in FIG. 1 and the information processing device 301 in FIG. 3 are merely examples, and some components may be omitted or modified according to the use or conditions of the image processing device. For example, in the information processing device 301 in FIG. 3, the registered biometric information 331 and the registered face image information 332 may be stored in a database outside the information processing device 301. In this case, the information processing device 301 acquires the registered biometric information 331 and the registered face image information 332 from the external database and stores the acquired information in the storage unit 311.

The flowcharts in FIG. 2, 9, and 10 are merely examples, and some processing may be omitted or modified according to the configuration or conditions of the information processing device 101 or the information processing device 301.

The captured image illustrated in FIG. 4 is merely an example, and the captured image changes according to a person existing in a capture area of the imaging device 303. The time changes of the position coordinates x illustrated in FIGs. 5 to 8 are merely examples, and the position coordinates x change according to the video 334.

Calculation formulas including the formulas (1) to (10) are merely examples, and the information processing device 301 may execute the biometric authentication processing using another calculation formula.

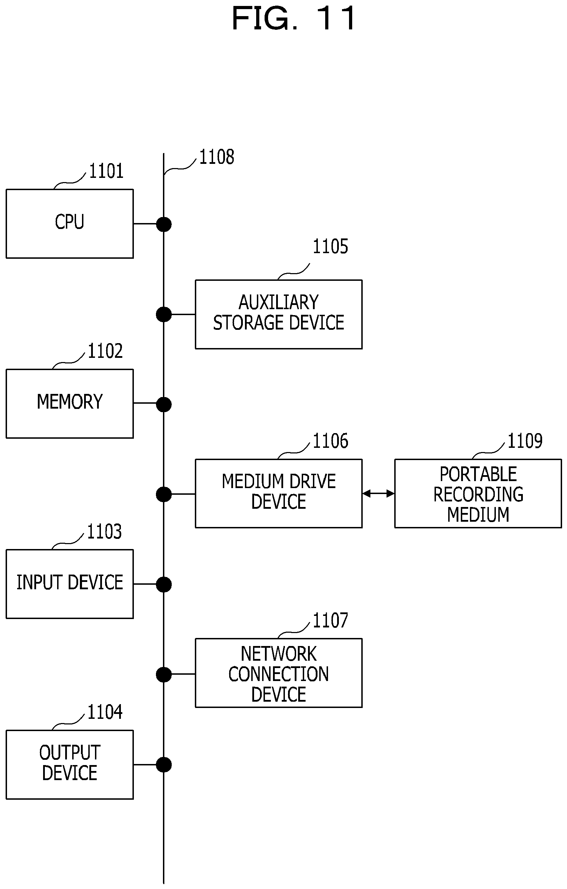

FIG. 11 illustrates a hardware configuration example of the information processing device 101 in FIG. 1 and the information processing device 301 in FIG. 3. The information processing device in FIG. 11 includes a central processing unit (CPU) 1101, a memory 1102, an input device 1103, an output device 1104, an auxiliary storage device 1105, a medium drive device 1106, and a network connection device 1107. Those components are hardware, and are coupled to each other by a bus 1108. The biometric sensor 302 and the imaging device 303 in FIG. 3 may be connected to the bus 1108.

The memory 1102 is, for example, a semiconductor memory such as a read only memory (ROM), a random access memory (RAM), or a flash memory, and stores programs and data used for processing. The memory 1102 may operate as the storage unit 311 in FIG. 3.

The CPU 1101 (processor) operates as the acceptance unit 111, the specifying unit 112, the selection unit 113, and the authentication unit 114 in FIG. 1 by executing a program using, for example, the memory 1102. The CPU 1101 also operates as the biometric information acquisition unit 312, the video acquisition unit 313, the person detection unit 314, the stationary determination unit 315, the face selection unit 316, the face authentication unit 317, the biometric information selection unit 318, and the biometric authentication unit 319 in FIG. 3 by executing the program.

For example, the input device 1103 is a keyboard, a pointing device, or the like and is used to input an instruction or information from an operator or a user. The output device 1104 is, for example, a display device, a printer, a speaker, or the like and is used to inquire of an operator or a user or to output a processing result. The output device 1104 may operate as the output unit 320 in FIG. 3. The processing result may be the authentication result 338.

The auxiliary storage device 1105 is, for example, a magnetic disk device, an optical disk device, a magneto-optical disk device, a tape device, or the like. The auxiliary storage device 1105 may be a flash memory or a hard disk drive. The information processing device may store programs and data in the auxiliary storage device 1105 and load these programs and data into the memory 1102 to use. The auxiliary storage device 1105 may operate as the storage unit 311 in FIG. 3.

The medium drive device 1106 drives a portable recording medium 1109 and accesses recorded content of the portable recording medium 1109. The portable recording medium 1109 is a memory device, a flexible disk, an optical disk, a magneto-optical disk, or the like. The portable recording medium 1109 may be a compact disk read only memory (CD-ROM), a digital versatile disk (DVD), a universal serial bus (USB) memory, or the like. The operator or the user can store programs and data in the portable recording medium 1109 and load these programs and data into the memory 1102 to use.

As described above, a computer-readable recording medium in which the programs and data to be used for processing are stored is a physical (non-transitory) recording medium such as the memory 1102, the auxiliary storage device 1105, or the portable recording medium 1109.

The network connection device 1107 is a communication interface circuit that is connected to a communication network such as a local area network (LAN) or a wide area network (WAN), and performs data conversion associated with communication. The information processing device can receive programs and data from an external device via the network connection device 1107 and load these programs and data into the memory 1102 to use. The network connection device 1107 may operate as the output unit 320 in FIG. 3.

The network connection device 1107 may receive the biometric information to be authenticated 333 and the video 334 from the biometric sensor 302 and the imaging device 303, respectively, of FIG. 3 via the communication network.

Note that the information processing device does not need to include all the components in FIG. 11, and some components may be omitted according to the use or the condition. For example, in a case where the information processing device does not use the portable recording medium 1109 or the communication network, the medium drive device 1106 or the network connection device 1107 may be omitted.

While the disclosed embodiment and the advantages thereof have been described in detail, those skilled in the art will be able to make various modifications, additions, and omissions without departing from the scope of the present invention as explicitly set forth in the claims.

CITATION LIST

PATENT DOCUMENT

Patent Document 1: International Publication Pamphlet No. WO 2020/070821

NON-PATENT DOCUMENT

Non-Patent Document 1: "Fujitsu Develops Non-Contact Biometric Integration Technology as an Optimal Solution for a Cashless Society", [online], Fujitsu Laboratories Ltd., Press Release, October 4, 2018, [searched on December 16, 2019], Internet<URL:https://pr.fujitsu.com/jp/news/2018/10/4.html>
Non-Patent Document 2: Z. Cao et al., "Realtime Multi-Person 2D Pose Estimation using Part Affinity Fields", 2017 IEEE Conference on Computer Vision and Pattern Recognition (CVPR), pages 7291-7299, 2017.

**Claims**

1. An authentication method implemented by a computer, the method comprising:

   accepting biometric information to be authenticated detected by a first sensor;
   specifying one person included in one or more persons, based on a movement of each of the one or more persons, in a case where the one or more persons are detected by a second sensor at the time of detecting the biometric information to be authenticated;
   selecting registered biometric information associated with registered face image information that is similar to face image information of the one person, from among registered biometric information associated with each of a plurality of pieces of registered face image information; and
   authenticating the biometric information to be authenticated, based on a comparison result of comparing the biometric information to be authenticated with the selected registered biometric information.

2. The authentication method according to claim 1, wherein the specifying of the one person includes specifying the movement of each of the one or more persons, based on a result of detecting the one or more persons by the second sensor.

3. The authentication method according to claim 2, wherein the specifying of the one person includes

   determining whether or not a body portion of each of the one or more persons is stationary, and
   specifying a person who has the body portion that is stationary at the time of detecting the biometric information to be authenticated as the one person, from among the one or more persons.

4. The authentication method according to claim 2 or 3, wherein

   the second sensor is an imaging device, and
   the specifying of the one person includes
   specifying the movement of each of the one or more persons based on the captured image, in a case where the one or more persons appear in a captured image captured by the imaging device.

5. The authentication method according to any one of claims 1 to 4, wherein the first sensor is a vein sensor or a fingerprint sensor.

6. An information processing device comprising:

an acceptance unit configured to accept biometric information to be authenticated detected by a first sensor;
a specifying unit configured to specify one person included in one or more persons, based on a movement of each of the one or more persons, in a case where the one or more persons are detected by a second sensor at the time of detecting the biometric information to be authenticated;
a selection unit configured to select registered biometric information associated with registered face image information that is similar to face image information of the one person, from among registered biometric information associated with each of a plurality of pieces of registered face image information; and
an authentication unit configured to authenticate the biometric information to be authenticated, based on a comparison result of comparing the biometric information to be authenticated with the selected registered biometric information.

7. The information processing device according to claim 6, wherein the specifying unit specifies the movement of each of the one or more persons, based on a result of detecting the one or more persons by the second sensor.

8. The information processing device according to claim 7, wherein the specifying unit determines whether or not a body portion of each of the one or more persons is stationary, and specifies a person who has the body portion that is stationary at the time of detecting the biometric information to be authenticated as the one person, from among the one or more persons.

9. The information processing device according to claim 7 or 8, wherein

the second sensor is an imaging device, and
in a case where the one or more persons appear in a captured image captured by the imaging device, the specifying unit specifies the movement of each of the one or more persons based on the captured image.

10. The information processing device according to any one of claims 6 to 9, wherein the first sensor is a vein sensor or a fingerprint sensor.

11. An authentication program comprising instructions which, when executed by a computer, cause the computer to perform processing, the processing comprising:

accepting biometric information to be authenticated detected by a first sensor;
specifying one person included in one or more persons, based on a movement of each of the one or more persons, in a case where the one or more persons are detected by a second sensor at the time of detecting the biometric information to be authenticated;
selecting registered biometric information associated with registered face image information that is similar to face image information of the one person, from among registered biometric information associated with each of a plurality of pieces of registered face image information; and
authenticating the biometric information to be authenticated, based on a comparison result of comparing the biometric information to be authenticated with the selected registered biometric information.

12. The authentication program according to claim 11, wherein the specifying of the one person includes specifying the movement of each of the one or more persons, based on a result of detecting the one or more persons by the second sensor.

13. The authentication program according to claim 12, wherein the specifying of the one person includes

determining whether or not a body portion of each of the one or more persons is stationary, and
specifying a person who has the body portion that is stationary at the time of detecting the biometric information to be authenticated as the one person, from among the one or more persons.

14. The authentication program according to claim 12 or 13, wherein

the second sensor is an imaging device, and
the specifying of the one person includes
specifying the movement of each of the one or more persons based on the captured image, in a case where the one or more persons appear in a captured image captured by the imaging device.

**15.** The authentication program according to any one of claims 11 to 14, wherein the first sensor is a vein sensor or a fingerprint sensor.

# FIG. 1

<u>101</u>

INFORMATION PROCESSING DEVICE

111 — ACCEPTANCE UNIT

112 — SPECIFYING UNIT

113 — SELECTION UNIT

114 — AUTHENTICATION UNIT

# FIG. 2

```
                    ┌─────────────┐
                    │    START    │
                    └──────┬──────┘
                           │
                           ▼
        ┌──────────────────────────────────────┐
  201   │  ACCEPT BIOMETRIC INFORMATION TO BE   │
        │            AUTHENTICATED              │
        └──────────────────┬───────────────────┘
                           │
                           ▼
        ┌──────────────────────────────────────┐
  202   │             SPECIFY PERSON            │
        └──────────────────┬───────────────────┘
                           │
                           ▼
        ┌──────────────────────────────────────┐
  203   │       SELECT REGISTERED BIOMETRIC     │
        │               INFORMATION             │
        └──────────────────┬───────────────────┘
                           │
                           ▼
        ┌──────────────────────────────────────┐
  204   │              AUTHENTICATE             │
        └──────────────────┬───────────────────┘
                           │
                           ▼
                    ┌─────────────┐
                    │     END     │
                    └─────────────┘
```

# FIG. 3

INFORMATION PROCESSING DEVICE ⌒ 301

| | |
|---|---|
| BIOMETRIC SENSOR ⌒ 302 | BIOMETRIC INFORMATION ACQUISITION UNIT ⌒ 312 |
| IMAGING DEVICE ⌒ 303 | VIDEO ACQUISITION UNIT ⌒ 313 |

STORAGE UNIT ⌒ 311

PERSON DETECTION UNIT ⌒ 314

STATIONARY DETERMINATION UNIT ⌒ 315

FACE SELECTION UNIT ⌒ 316

FACE AUTHENTICATION UNIT ⌒ 317

BIOMETRIC INFORMATION SELECTION UNIT ⌒ 318

BIOMETRIC AUTHENTICATION UNIT ⌒ 319

OUTPUT UNIT ⌒ 320

REGISTERED BIOMETRIC INFORMATION ⌒ 331

REGISTERED FACE IMAGE INFORMATION ⌒ 332

BIOMETRIC INFORMATION TO BE AUTHENTICATED ⌒ 333

VIDEO ⌒ 334

POSITION INFORMATION ⌒ 335

FACE IMAGE ⌒ 336

CANDIDATE LIST ⌒ 337

AUTHENTICATION RESULT ⌒ 338

# FIG. 4

# FIG. 5

# FIG. 6

# FIG. 7

# FIG. 8

# FIG. 9

START

901 — DETECT FACE IMAGE

902 — DETECT POSITION

903 — GENERATE POSITION INFORMATION

904 — INSTRUCT TO INPUT BIOMETRIC INFORMATION

905 — INPUT BIOMETRIC INFORMATION

906 — ACQUIRE ACCEPTING CLOCK TIME

907 — SPECIFY PERSON TO BE AUTHENTICATED

908 — SELECT FACE IMAGE

909 — PERFORM FACE AUTHENTICATION

910 — PERFORM BIOMETRIC AUTHENTICATION

END

# FIG. 10

```
           ┌─────────────┐
           │    START    │
           └──────┬──────┘
                  │
                  ▼
    ┌──────────────────────────────┐
    │      DETECT FACE IMAGE        │ ～1001
    └──────────────┬───────────────┘
                   │
                   ▼                        1002
  YES      ╱──────────────────────╲
 ┌─────────       ONLY ONE PERSON?  ╲
 │         ╲──────────────────────╱
 │                   │ NO
 │                   ▼
 │    ┌──────────────────────────────┐
 │    │  PERFORM PERSON SPECIFICATION │ ～1003
 │    │          PROCESSING           │
 │    └──────────────┬───────────────┘
 │                   │
 └──────────────────►│
                     ▼
    ┌──────────────────────────────┐
    │   PERFORM FACE AUTHENTICATION │ ～1004
    └──────────────┬───────────────┘
                   │
                   ▼
    ┌──────────────────────────────────┐
    │ PERFORM BIOMETRIC AUTHENTICATION  │ ～1005
    └──────────────┬───────────────────┘
                   │
                   ▼
           ┌─────────────┐
           │     END     │
           └─────────────┘
```

# FIG. 11

**EP 4 167 112 A1**

<table>
<tr><td colspan="2">INTERNATIONAL SEARCH REPORT</td><td colspan="2">International application No.<br>PCT/JP2020/023005</td></tr>
</table>

A. CLASSIFICATION OF SUBJECT MATTER
Int. Cl. G06F21/32(2013.01)i
FI: G06F21/32

According to International Patent Classification (IPC) or to both national classification and IPC

B. FIELDS SEARCHED

Minimum documentation searched (classification system followed by classification symbols)
Int. Cl. G06F21/32

Documentation searched other than minimum documentation to the extent that such documents are included in the fields searched
Published examined utility model applications of Japan      1922-1996
Published unexamined utility model applications of Japan    1971-2020
Registered utility model specifications of Japan            1996-2020
Published registered utility model applications of Japan    1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2017-49867 A (NEC CORP.) 09 March 2017, paragraphs [0012]-[0048] | 1-15 |
| Y | JP 2005-242677 A (NTT COMWARE CORP.) 08 September 2005, paragraph [0007] | 1-15 |
| Y | JP 2013-250856 A (MITSUBISHI ELECTRIC CORP.) 12 December 2013, paragraphs [0048]-[0056] | 1-15 |
| Y | JP 2007-156790 A (HITACHI-OMRON TERMINAL SOLUTIONS, CORP.) 21 June 2007, paragraphs [0030]-[0034], [0037] | 1-15 |
| Y | JP 2007-154472 A (HITACHI INFORMATION & CONTROL SOLUTIONS, LTD.) 21 June 2007, paragraph [0025] | 1-15 |

☐ Further documents are listed in the continuation of Box C.    ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>26.08.2020 | Date of mailing of the international search report<br>08.09.2020 |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

25

INTERNATIONAL SEARCH REPORT
Information on patent family members

| International application No. |
| --- |
| PCT/JP2020/023005 |

| Patent Documents referred to in the Report | Publication Date | Patent Family | Publication Date |
| --- | --- | --- | --- |
| JP 2017-49867 A | 09.03.2017 | (Family: none) | |
| JP 2005-242677 A | 08.09.2005 | (Family: none) | |
| JP 2013-250856 A | 12.12.2013 | (Family: none) | |
| JP 2007-156790 A | 21.06.2007 | (Family: none) | |
| JP 2007-154472 A | 21.06.2007 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020070821 A

**Non-patent literature cited in the description**

- Fujitsu Develops Non-Contact Biometric Integration Technology as an Optimal Solution for a Cashless Society. Fujitsu Laboratories Ltd, 04 October 2018

- **Z. CAO et al.** Realtime Multi-Person 2D Pose Estimation using Part Affinity Fields. *2017 IEEE Conference on Computer Vision and Pattern Recognition (CVPR),* 2017, 7291-7299